# EUROPEAN PATENT SPECIFICATION

(11) **EP 1 504 989 B1**
(45) Date of publication and mention of the grant of the patent: **21.03.2012**
(21) Application number: 03425534.9
(22) Date of filing: 05.08.2003
(51) Int. Cl.: B62M 9/132, B62M 25/08

(54) **Actuator device and relative nut for a bicycle gearshift, with an elastically yieldind member**
Fahrradgangschaltungsvorrichtung und eine dieser Vorrichtung angepasste Mutter mit elastischem Element
Dérailleur de bicyclette et écrou correspondant avec elément élastique

(43) Date of publication of application: 09.02.2005
(73) Proprietor: CAMPAGNOLO S.R.L., I-36100 Vicenza (IT)
(72) Inventor: Meggiolan, Mario, 36051 Creazzo (Vicenza) (IT)
(74) Representative: Checcacci, Giorgio

(56) References cited:
- EP-A- 0 936 380
- EP-A- 1 010 612
- EP-A- 1 103 456
- EP-A- 1 357 023
- DE-A- 3 502 774
- US-A- 2 649 300
- US-A- 4 459 867
- US-A- 5 761 963

## Description

The present invention refers both to an actuator device for a bicycle gearshift, comprising an actuation mechanism, intended to be driven by a drive member and in turn to drive a derailleur of the gearshift, and to a nut for such a device.

In the context of this patent description and the following claims, the gearshift to which reference is made can be either the rear one, which shifts the chain between the different sprockets associated with the rear wheel of the bicycle, or the front one, which shifts the chain between the different crowns associated with the pedal cranks.

In relatively recent times bicycle gearshifts with motorised actuation have become widespread, wherein the displacement of the derailleur which deviates the chain takes place under the action of a drive member that is suitably operated, typically electrically. In the development of these gearshifts, a great deal of attention has, of course, been given to the quality of actuation, intended as the ability of the gearshift to perform gear-shifting quickly and precisely at least to the same degree as a conventional manually actuated gearshift. Inventors have, however, realised that in normal use the performance of a motorised actuation gearshift is often compromised by even small damage, which is often the consequence of invisible knocks received by the gearshift itself.

Indeed, with gearshifts of this type the actuation mechanism is a system that is mechanically coupled with the drive member. In the case of knocks, due for example to the bicycle falling or even due only to loading, unloading and transportation on a vehicle, the gearshift can undergo various amounts of damage. A particularly serious knock can, in the most serious of cases, cause the breaking of some members of the gearshift; less serious knocks can, on the other hand, cause small deformations or even just small mutual displacements of the members of the gearshift, often not immediately noticeable at a glance, but still such as to compromise the precision and therefore the good operation of the gearshift. These deformations or displacements can, in other cases, be determined during gear-shifting by temporary locking of the mechanism with respect to the drive member, as sometimes occurs following mechanical interference between the chain and the sprockets.

EP 1 010 612 A1 discloses an electro-actuated gearshift of a bicycle that includes a spring in the mechanic chain between a motor and a derailleur. The deformability of the spring is selected so that the spring can act as a shock absorber to protect the motor and the gearshift in the event the bicycle falls over and the derailleur strikes the ground.

EP 1 357 023 A1 discloses an embodiment in which an electro-actuated gearshift of a bicycle includes a mechanic fuse in the mechanic chain between a motor and a derailleur. The strength of the fuse is selected so that it can absorb the effect of a knock on the derailleur when the bicycle falls.

The problem at the basis of the present invention is that of protecting the actuation mechanism of a motorised actuation gearshift in a simple and efficient manner.

Therefore, in its most general terms the present invention concerns, in a first aspect thereof, an actuator device for a bicycle gearshift according to claim 1, and in a second aspect thereof, a nut for an actuator device for a bicycle gearshift according to claim 13. Preferred characteristics are indicated in the dependent claims.

The yield of one of the members of the mechanism when subjected to a stress beyond a predetermined threshold ensures that in the case of a knock it is this member that yields instead of others. The elasticity of the member also ensures that the starting condition is completely recovered, without there being residual deformations which could easily disturb the operation of the gearshift.

An additional advantage of such a solution when applied to a rear gearshift is the greater ease of assembly and disassembly of the wheel. Indeed, the yield can be exploited by the operator to make the engagement or disengagement of the chain from the sprockets easier.

The member which is capable of elastically yielding is subjected to a stress below the predetermined threshold stress during normal use of the gearshift when said mechanism is driven by the drive member to drive the derailleur, said member which is capable of elastically yielding being substantially rigid when subjected to a stress below the predetermined threshold stress. In such a way, the yield of the aforementioned member does not interfere with the normal operation of the gearshift.

Should one wish to widen the field of operation in which the system readily responds, the threshold stress is advantageously chosen high. On the other hand, should one wish to allow the device to absorb even small knocks, the threshold stress is chosen with a lower value, although in such a way reducing the field in which the system readily responds.

Preferably, said member which is capable of elastically yielding comprises a preloaded spring. By the term spring an element is generically meant that is able to provide an elastic reaction of whatever type: by traction, compression, torsion, bending; it can, for example, be a metal helical spring, a metal torsion spring, a metal Belleville spring, a flexible foil, an air spring, a variously shaped elastomeric spring, and the like. By the adjective preloaded there is meant that the spring is used in a pre-stressed state, for example pre-compressed or else pre-stretched, in such a way that at rest it applies an elastic stress different to zero, equal to the desired threshold stress. The spring is thus able to yield elastically only if the stress applied onto it is greater than the predetermined threshold stress value, like in the case of a knock; if, on the other hand, the stress applied is lower, like in the case of normal use of the gearshift, the spring has no yield.

The member which is capable of elastically yielding can be any of the members of the mechanism, provided that - as stated - it is a member that is subjected to a stress in the case in which the gearshift undergoes a knock of the type from which one wishes to protect the gearshift itself. It may be a member of those normally provided in the mechanism (for example a lever, a connecting rod, a nut, a shaft, a pin), modified so as to give it the aforementioned elastic properties, or else it can be an additional member equipped with the aforementioned elastic properties and placed between two other members. Hereafter, some preferred solutions shall be described, referring to the typical case in which the drive member comprises a motor and a threaded drive shaft rotated by the motor.

In a first preferred solution, the mechanism comprises:
- an articulated quadrilateral with four connecting rods hinged together about four pin axes by four pin elements, wherein the first connecting rod is intended to be solidly fastened to a bicycle frame, and the second connecting rod is opposite the first connecting rod in the articulated quadrilateral and is intended to be fastened to a support for the derailleur;
- a support for the motor associated with a first of the pin elements;
- a nut associated with a second of the pin elements, opposite the first, the nut being intended for engagement with the drive shaft so that the action of the motor takes the two opposite first and second pin elements closer and farther away, deforming the articulated quadrilateral, said nut comprising the member which is capable of elastically yielding.

In a second preferred solution, the mechanism comprises:
- an articulated quadrilateral with four connecting rods hinged together about four pin axes by four pin elements, wherein the first connecting rod is intended to be solidly fastened to a bicycle frame, and the second connecting rod is opposite the first connecting rod in the articulated quadrilateral and is intended to be fastened to a support for the derailleur;
- an arm integral with the third connecting rod of the articulated quadrilateral;
- a nut associated with a fifth pin element mounted on the arm, the nut being intended for engagement with the drive shaft so that the action of the motor moves the arm, deforming the articulated quadrilateral, said nut comprising the member which is capable of elastically yielding.

The deformable quadrilateral mechanism with the motor which acts diagonally is typical of a rear gearshift, whereas the deformable quadrilateral mechanism with the motor which acts externally on an arm is typical of a front gearshift. The solution proposed of providing in the nut the member which is capable of elastically yielding is advantageous, for its simplicity and effectiveness, since it allows the protective intervention to occur right where the presence of the motor (with its rigidity, both when stopped and during actuation) determines the problem.

Preferably, the nut comprises:
- an internally hollow tubular body,
- two abutment surfaces in the axial direction formed at opposite ends of the tubular body;
- two opposite pin portions, integral with and perpendicular to the tubular body;
- a tubular sleeve, threaded internally, intended for engagement with the drive shaft and inserted so that it can slide axially in the tubular body;
- two protruding abutment collars provided on the threaded tubular sleeve at opposite ends thereof,
- a spring inserted on the threaded tubular sleeve, compressed between a first of the abutment collars of the threaded tubular sleeve and a first of the abutment surfaces of the tubular body, with the second of the abutment collars of the tubular sleeve facing the second of the abutment surfaces of the tubular body due to the elastic thrust of the spring, the spring being the member which is capable of elastically yielding.

This structure is simple, compact and effective. The amount of the threshold stress can easily be determined, both by suitably sizing the spring, and by causing its correct compression with a suitable choice of the position of the collars and of the length of the tubular body; spacer rings of different thicknesses rested upon the collars may be useful for particularly fine adjustment of the compression.

Such a nut can also operatively take the place of a conventional nut, allowing an existing actuator device to be modified into an actuator device according to the invention.

Moreover, with such a structure it is also possible and easy to provide further security against particularly hard knocks which can take the spring to the end stop, a condition in which the spring can no longer offer any protection. By sizing one of the collars so that it yields when subjected to a stress greater than a maximum value, a sort of "mechanical fuse" is obtained, which is not able to reset by itself after the knock but rather requires a technical intervention, however being precious to protect the other members of the mechanism, which are much more costly to repair if damaged.

According to the operative arrangement of the drive member with respect to the knock from which one wishes to protect the gearshift, it is possible that the knock tends to cause pressure or else traction on the threaded drive shaft. Consequently, the nut can be provided to be mounted so that the drive shaft is inserted in the tubular sleeve from the side of the first or else from the side of the second abutment collar.

In another preferred solution, the nut could be equipped with a first spring inserted on the threaded tubular sleeve between a first of the abutment collars of the threaded tubular sleeve and a first of the abutment surfaces of the tubular body and with a second spring inserted on the threaded tubular sleeve between the second of the abutment collars of the threaded tubular sleeve and the second of the abutment surfaces of the tubular body. In such a way the gearshift is protected both from knocks which tend to cause pressure on the threaded drive shaft and from knocks which tend to cause traction on the threaded drive shaft.

In a further preferred solution, suitable for a front gearshift, the mechanism comprises:
- an articulated quadrilateral with four connecting rods hinged together about four pin axes by four pin elements, wherein the first connecting rod is intended to be solidly fastened to a bicycle frame, and the second connecting rod is opposite the first connecting rod in the articulated quadrilateral and is intended to be fastened to a support for the derailleur;
- a lever connected to the third connecting rod of the articulated quadrilateral;
- a sector gear integral with the lever and intended for engagement with the drive shaft so that the action of the motor moves the lever,
- a spring acting between the lever and the third connecting rod, said spring being the member which is capable of elastically yielding.

This solution also has proved suitable for solving the problem of the protection of the actuation mechanism of a motorised actuation gearshift.

The coupling between the lever and the third connecting rod can be of various types, provided it ensures the pulling into rotation of the connecting rod by the lever. For example and preferably:
- the lever is hinged to the common pin element between the first connecting rod and the third connecting rod, and comprises a first abutment surface in the angular direction;
- the third connecting rod comprises a first abutment surface in the angular direction, facing the first abutment surface of the lever.

In this case, the arrangement of the member which is capable of elastically yielding can be obtained ensuring that:
- the lever comprises a second abutment surface, facing in an angularly opposite direction with respect to the first abutment surface;
- the third connecting rod comprises a second abutment surface, facing in an angularly opposite direction with respect to the first abutment surface, facing the second abutment surface of the lever;
- a spring is compressed between the second abutment surfaces of the lever and of the third connecting rod, so as to angularly force the lever and the third connecting rod with the respective first abutment surfaces against one another.

Also in this case, as in those described previously, the amount of the threshold stress can easily be determined, both by suitably sizing the spring, and by causing its correct compression with a suitable choice of the position of the abutment surfaces of the lever and of the third connecting rod.

Alternatively, it is also possible to obtain the same result that has just been described by providing a torsion spring, pre-loaded and mounted between the lever and the third connecting rod so as to angularly force them with the respective first abutment surfaces against one another. In this case, constructively simpler, the determination of the amount of the threshold stress is entrusted to the sizing of the torsion spring.

Further characteristics and advantages of an actuator device for a bicycle gearshift and of a nut according to the invention shall become clearer from the following description of some preferred embodiments. Such embodiments are provided as an example and are shown in the attached drawings, wherein:
- figure 1 is a perspective view of an actuator device in accordance with a first embodiment of the invention;
- figure 2 is a different perspective view of the device of figure 1;
- figure 3 is a section view of a second embodiment of the invention;
- figure 4 is an exploded perspective view of a third embodiment of the invention;
- figure 5 is a scaled-up view of the detail A of figure 4;
- figure 6 is a section view of part of the device of figures 4 and 5;
- figure 7 is a section view of a nut in accordance with the invention, used in the devices of figures 1 to 3;
- figure 8 is an exploded perspective view of the nut of figure 7.

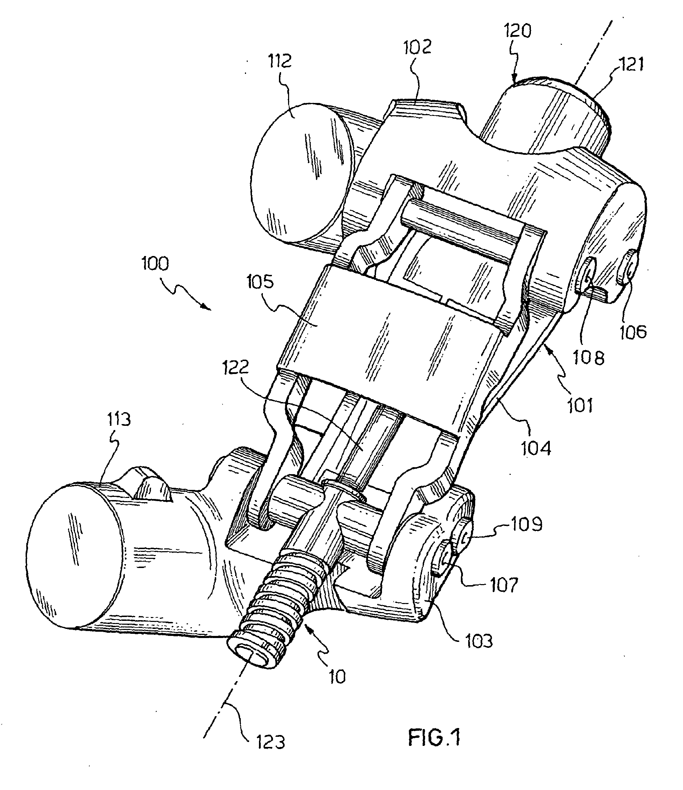

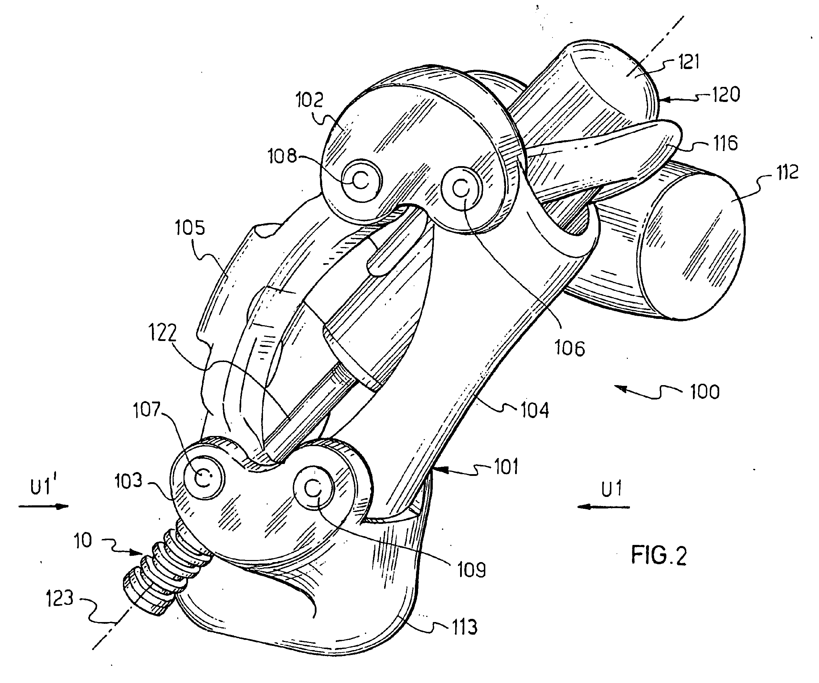

With particular reference to figures 1 and 2, an actuator device for a bicycle gearshift, particularly a rear gearshift, according to a first embodiment of the invention, is indicated with 100.

The device 100 comprises an actuation mechanism 101 in the shape of an articulated quadrilateral, more precisely an articulated parallelogram, intended to be driven by a drive member 120 and in turn to drive a normal derailleur (not shown) of a rear gearshift of a bicycle. In alternative embodiments (not shown) the articulated quadrilateral can be a trapezium instead of a parallelogram.

The mechanism 101 comprises four connecting rods articulated together by four pin elements. The connecting rods comprise a first connecting rod 102 associated with a support 112 for fastening onto a bicycle frame, a second connecting rod 103 opposite the first connecting rod 102 and associated with a support 113 for fastening the derailleur, a third connecting rod 104 and a fourth connecting rod 105. The pin elements comprise a first pin element 106 (between the first and the third connecting rod 102 and 104), a second pin element 107 opposite the first (between the second and the fourth connecting rod 103 and 105), a third pin element 108 (between the first and fourth connecting rod 102 and 105) and a fourth pin element 109 opposite the third (between the second and third connecting rod 103 and 104).

A support 116 for the drive member 120 is associated with the first pin element 106. It should be noted that with the term "associated" referring to a member in relation to a pin element or to a connecting rod there is meant, here and in the following, that the member in question is mechanically connected to the pin element or to the connecting rod, or is formed integrally with it, or else that such a member is shaped in such a way as to be able to perform the functions of the pin element or of the connecting rod. The drive member 120 comprises an electric motor 121 (supplied with power and controlled by means of cables and control members that are not shown in the figures) equipped with a threaded drive shaft 122, extending along a driving axle 123 and rotated by the motor 121. In the shown example, the support 116 is substantially cradle-shaped, so as to be able to house the motor 121 with the driving axle 123 substantially at the axis of the pin 106.

The drive member 120 is coupled with the mechanism 101 by means of a nut 10, in screwing engagement with the threaded drive shaft 122 and associated with the second pin element 107. Through the nut 10 and the support 116, the drive member 120 is able to move the mechanism 101, lengthening or shortening the diagonal between the pin elements 106 and 107. In particular, given that the device 100 is used in a rear gearshift of a bicycle, a lengthening of such a diagonal shall be used to perform upwards gear-shifting (towards an inner sprocket of the sprocket, with a larger diameter), whereas, vice-versa, a shortening of the diagonal shall be used for downwards gear-shifting (towards an outer sprocket of the sprocket, with a smaller diameter).

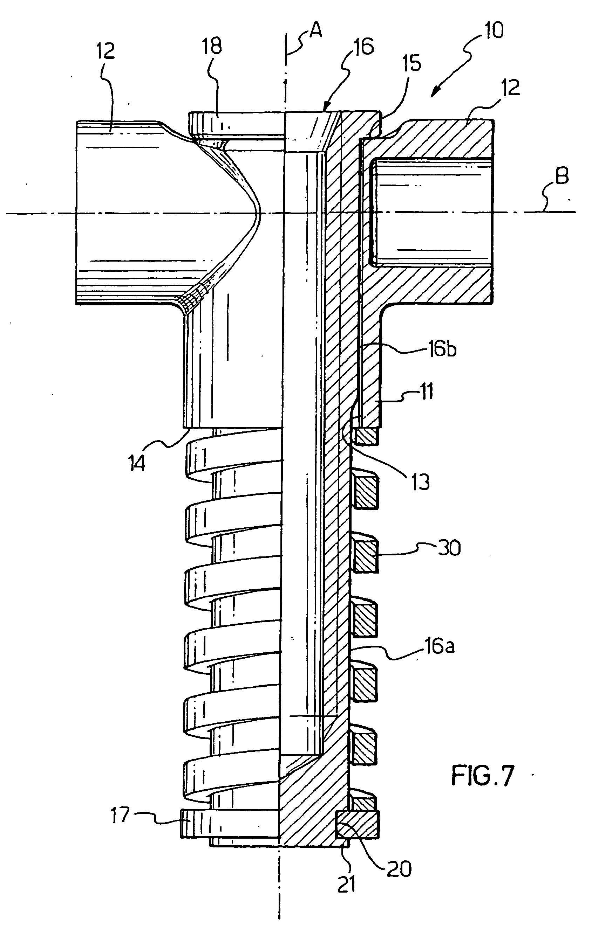

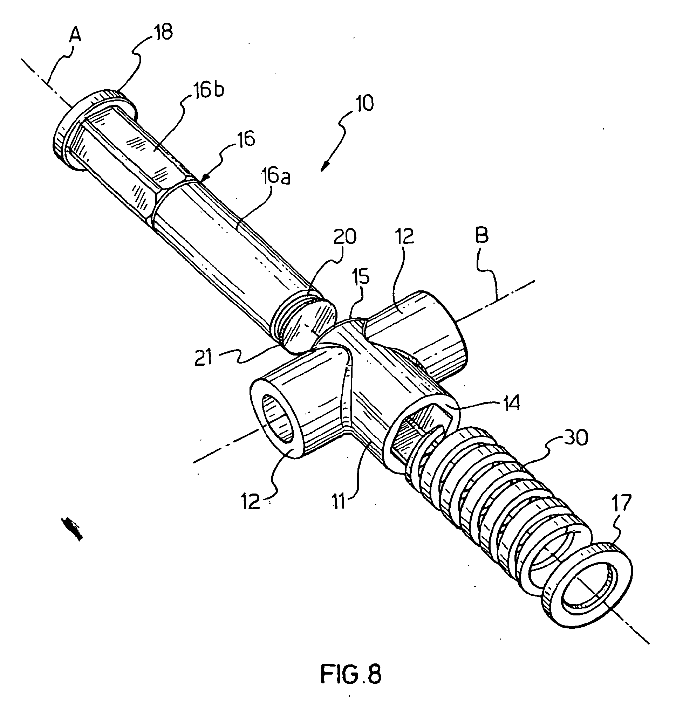

In accordance with the invention, the nut 10 (better shown in figures 7 and 8) comprises a tubular body 11 extending along an axis A and integral with two identical pin portions 12, which are aligned and opposite each other, extending along an axis B substantially perpendicular to the axis A. The pin portions 12 are integral with the tubular body 11 or preferably are formed integrally with it. The tubular body 11 is equipped with an inner through-recess 13 with a polygonal section, extending along the axis A between two annular abutment surfaces, a first abutment surface 14 and a second abutment surface 15, formed at opposite ends of the tubular body 11.

The nut 10 also comprises a tubular sleeve 16, threaded internally with an inner threading matching the outer threading of the drive shaft 122, so as to allow the engagement between the drive shaft 122 and the nut 10. The sleeve 16 has a portion 16a with an externally circular section and a portion 16b with an externally polygonal section, matching the section of the inner recess 13, so as to allow the sleeve 16 inserted in the recess 13 of the tubular body 11 to be able to slide along the axis A but not to be able to rotate about such an axis. The sleeve 16 is equipped, at its opposite ends, with two protruding abutment collars, a first collar 17 and a second collar 18.

The first collar 17 is in the form of an elastic annular washer, mounted on the circular portion 16a of the sleeve 16, in a respective circumferential throat 20 formed on the outer surface of the sleeve 16. The second collar 18 is in the form of a protruding circular head of the portion 16b of the sleeve 16. Alternatively, the washer which forms the collar 17 can simply be inserted onto the circular portion 16a of the sleeve 16 and can be held here by an elastic ring (Seger ring), removably housed in a respective throat formed on the sleeve 16.

The nut 10 also comprises a spring 30, inserted on the sleeve 16. In conditions with the nut 10 mounted (figure 7), the sleeve 16 is inserted in the tubular body 11, with the second collar 18 facing the second abutment surface 15 and with the spring 30 compressed between the first abutment collar 17 and the first abutment surface 14.

The spring 30 shown as an example is a metal helical spring; instead of this, a tubular elastomeric spring or any other spring able to apply the same action in the nut 10 could be used.

Choice, sizing and compression of the spring 30 as well as assembling of the nut 10 are carried out depending upon the protective action that the nut 10 must provide inside the actuator device in which it is mounted.

In the device 100, it is necessary to avoid that a knock in the direction U1 against the device 100 itself can cause damage. This means that the elastic yield of the nut 10 must allow a lengthening of the diagonal between the pin elements 106 and 107 also with the motor 121 off (or at least a lengthening different to what the motor 121 would apply). Consequently, the nut 10 is mounted by inserting the threaded drive shaft 122 into the sleeve 16 from the side of the second abutment collar 18: a knock will thus tend to compress the spring 30, making the sleeve 16 slide in the tubular body 11.

In a different embodiment (not shown), the spring 30 could be arranged between the second abutment collar 18 and the second abutment surface 15. In such a case, it is avoided that a knock in the direction U1' against the device 100 can cause damage. This means that the elastic yield of the nut 10 must allow a shortening of the diagonal between the pin elements 106 and 107 through the compression of the spring. When the knock finishes, the spring stretches out and takes the diagonal and therefore the gearshift back into the correct position. Such a characteristic of elastic yield of the nut 10 is advantageously also exploited in the upwards gear-shifting step in which, as stated, there is a lengthening of the diagonal. During the passage of the chain from a sprocket with a smaller diameter to a sprocket with a larger diameter, it may indeed occur that the mechanism remains temporarily locked by the interference which is created between chain and sprocket whilst the drive member still moves the sleeve 16 up to the final position. During such a transitory step the spring is compressed allowing the relative movement between sleeve 16 and tubular body 11. When the chain disengages, the elastic force of the spring thrusts the tubular body 11 into the desired final position allowing the gear-shifting to be carried out correctly.

Furthermore, in a more complex embodiment, both springs could be provided, both between the first abutment surface 14 and the first collar 17, and between the second abutment surface 15 and the second collar 18. In such a way, the nut would be able to absorb knocks coming from both directions U1 and U1'.

The sizing and the initial compression (preload) of the spring 30 are carried out so as to determine a predetermined threshold stress: when it is subjected to a stress below the threshold stress, the spring 30 does not deform and the nut 10 behaves like a rigid body, whereas when it is subjected to a stress above the threshold stress, the spring 30 yields and therefore the nut 10 deforms. The threshold stress value is thus chosen so as to be certainly above the component along the axis A of the maximum stress occurring in the mechanism 101 during normal operation, but also certainly below the component along the axis A of the minimum stress from a knock capable of damaging a member of the mechanism 101 itself.

The behaviour as a rigid body of the nut 10 ensures the ready response of the mechanism following the actuation of the drive member. Should one wish to widen the field of operation in which the system readily responds, the threshold stress is advantageously chosen high. On the other hand, should one wish to allow the device to absorb even small knocks, the threshold stress is chosen with a lower value, although reducing the field in which the system readily responds.

Of course, the structural strength of each member of the mechanism 101 must be sufficiently high as to allow it to be possible to determine a threshold stress in the aforementioned way; for such a purpose, it is advantageous that the axis A according to which the elastic yield of the spring 30 occurs be the same one according to which the deformation force (when actuated) or resistance force (when still) of the drive member 120 is applied.

It should be noted that the effect of the knock on the actuator device 100 remains limited to the deformation of the spring 30, so that all of the other members of the device itself and more generally of the gearshift remain protected. This is true provided that the spring 30 is not so compressed by the knock as to go to the end stop; in such a case, indeed, every further stress component would be applied onto the other members of the device.

To avoid this risk, in a variant (not shown) a mechanical fuse function can be provided, for example adopting a collar 17 having a predetermined mechanical resistance, such as to yield (causing the disassembly of the nut 10) if stressed beyond a certain threshold; alternatively, the same function can be obtained on the abutment collar 18 or on the Seger ring (in a variant which provides it), sizing them suitably, or else on the throat 20, suitably sizing the shoulder 21 which separates it from the end of the sleeve 16. In any case, for an optimal combination of the two protections, the resistance threshold of the fuse must be such that the yielding of the fuse occurs just before the spring 30 has reached the end stop.

It should be noted that the intervention of the spring 30 in the case of a knock is perfectly and automatically reversible, in the sense that once the knock has ended, the spring 30 goes back into its starting position, as shown in figure 7.

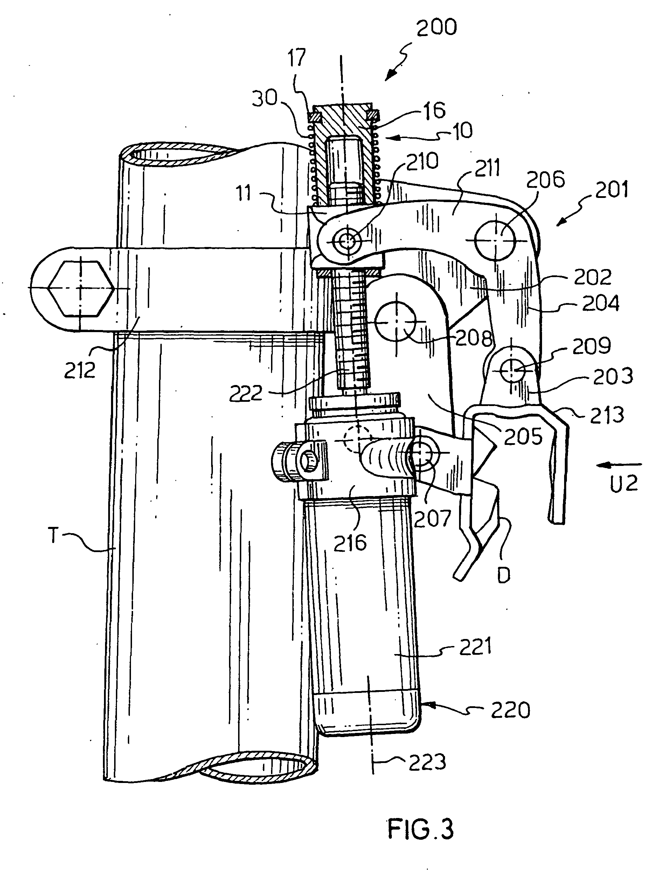

A second embodiment of the invention is exemplified in figure 3, wherein actuator device for a bicycle gearshift, particularly a front gearshift, is indicated with 200.

The device 200 comprises an actuation mechanism 201 in the shape of an articulated quadrilateral, more precisely an articulated parallelogram, intended to be driven by a drive member 220 and in turn to drive a normal derailleur D of a front gearshift of a bicycle.

The mechanism 201 comprises four connecting rods articulated together by four pin elements. The connecting rods comprise a first connecting rod 202 integral with a support 212 for fastening onto a bicycle frame, a second connecting rod 203 opposite the first connecting rod 202 and integral with a support 213 for the attachment of the derailleur, a third connecting rod 204 and a fourth connecting rod 205. The pin elements comprise a first pin element 206 (between the first and third connecting rod 202 and 204), a second pin element 207 opposite the first one (between the second and fourth connecting rod 203 and 205), a third pin element 208 (between the first and fourth connecting rod 202 and 205) and a fourth pin element 209 opposite the third one (between the second and third connecting rod 203 and 204).

A support 216 for the drive member 220 is directly associated with the frame T of the bicycle. The drive member 220 comprises an electric motor 221 (supplied with power and controlled by means of cables and control members which are not shown in the figures) equipped with a threaded drive shaft 222, extending along a driving axle 223 and rotated by the motor 221.

The drive member 220 is coupled with the mechanism 201 by means of a nut 10, in screwing engagement with the threaded drive shaft 222 and associated with a fifth pin element 210, mounted on an arm 211 integral with the third connecting rod 204. Through the nut 10 and the support 216, the drive member 220 is able to move the mechanism 201, angularly moving the arm 211 so as to take the nut 10 closer or farther away with respect to the motor 221, or else to move the third connecting rod 204 inwards or outwards. In particular, given that the device 200 is used in a front gearshift of a bicycle, a movement of the nut 10 towards the motor 221 shall be used to perform an upwards gear-shifting (towards an outer sprocket of the crown, with a larger diameter), whereas, vice-versa, a movement of the nut away from the motor 221 shall be used for a downwards gear-shifting (towards an inner sprocket of the crown, with a smaller diameter).

The nut 10 in the device 200 is the same as the nut 10 used in the device 100, and shall not therefore be described any further. The considerations expressed regarding the sizing and the assembly of such a nut 10 remain equally valid.

In the device 200, it is necessary to avoid that a knock in the direction U2 against the device 200 itself can cause damage. This means that the elastic yield of the nut 10 must allow a displacement inside the derailleur D and therefore must allow the nut 10 to move away from the motor 221, with the motor 221 stopped. Consequently, the nut 10 is mounted by inserting the threaded drive shaft 222 into the sleeve 16 from the side of the second abutment collar 18: a knock will thus tend to compress the spring 30, making the sleeve 16 slide in the tubular body 11.

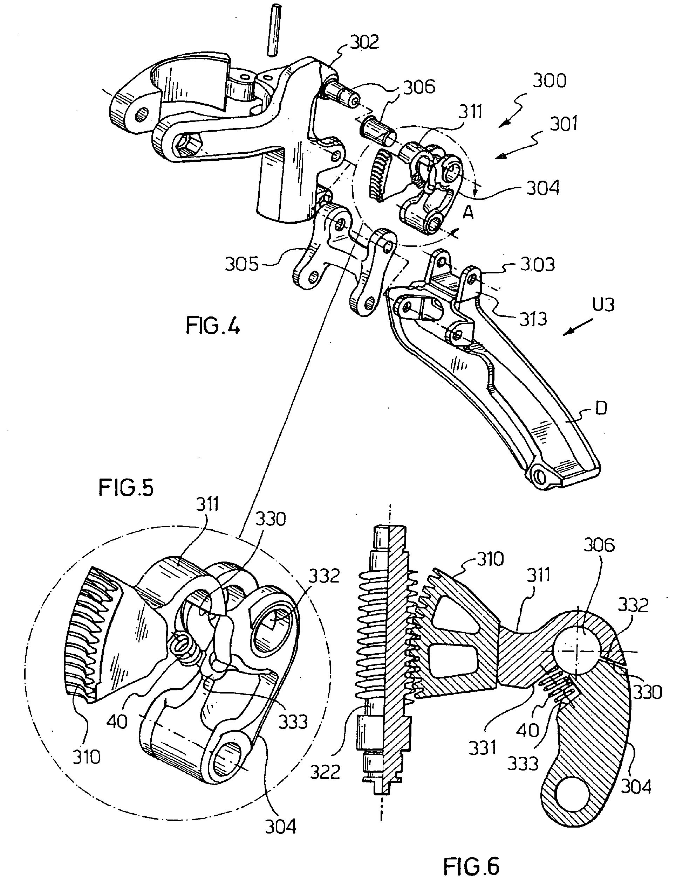

A third embodiment of the invention is exemplified in figures 4, 5 and 6, where an actuator device for a bicycle gearshift, particularly a front gearshift is indicated with 300.

The device 300 comprises an actuation mechanism 301 in the shape of an articulated quadrilateral, more precisely an articulated parallelogram, analogous to the mechanism 201 of the device 200 and shown only in part in the figures; it must be understood that for what is not shown the device 301 is the same as the device 201.

The difference between the two devices is in the connection between the drive shaft and the third connecting rod. Instead of the system with a nut and arm integral with the connecting rod, in the device 301 a sector gear 310 is provided integral with a lever 311. The sector gear 310 is engaged with the drive shaft 322. The lever 311 is hinged to the pin element 306 common to the first and third connecting rod 302 and 304, and comprises a first and second abutment surface 330 and 331, oriented radially in opposite directions about the axis of the pin element 306. Correspondingly, the third connecting rod 304 comprises a first and a second abutment surface 332 and 333, oriented radially in opposite directions about the axis of the pin element 306; the first abutment surface 330 of the lever 311 faces the first abutment surface 332 of the third connecting rod 304, whereas the second abutment surface 331 of the lever 311 faces the second abutment surface 333 of the third connecting rod 304.

A spring 40 is placed in compressed state between the second abutment surfaces 331 and 333 of the lever 311 and of the third connecting rod 304, so as to angularly force the lever 311 and the third connecting rod 304 with the respective first abutment surfaces 330 and 332 against each other.

The spring 40 shown as an example is a metal helical spring; instead of this an elastomeric spring or any other spring able to apply the same action between the lever 311 and the third connecting rod 304 could be used; for example, the spring 40 (with the second abutment surfaces 330 and 332 between which it is compressed) could be replaced with a torsion spring (not shown), mounted so as to force, in the same way, the lever 311 and the third connecting rod 304 with the respective first abutment surfaces 330 and 332 against each other.

Operatively, during gear-shifting in normal conditions, the lever 311 and the third connecting rod 304 move integrally substantially realising a single body.

In the case of knocks in the direction U3 on the derailleur D or on the third connecting rod 304, the spring 40 compresses absorbing the force of the knock applied on the quadrilateral allowing it to deform with the moving apart of the first abutment surface 330 of the third connecting rod 304 getting farther away from the first abutment surface 332 of the lever 311. When the force of the knock has ended, the spring 40 goes back into the starting conditions, taking the third connecting rod 304 with its first abutment surface 330 back against the first abutment surface 332 of the lever 311.

## Claims

1. Actuator device for a bicycle gearshift, comprising an actuation mechanism (101, 201, 301), intended to be driven by a drive member (120, 220, 320) and in turn to drive a derailleur (D) of the gearshift, said mechanism (101, 201, 301) comprising at least one member (30, 40) which is capable of elastically yielding when subjected to a stress above a predetermined threshold stress, and wherein said member which is capable of elastically yielding (30, 40) is subjected to a stress below said predetermined threshold stress during normal use of the gearshift when said mechanism is driven by the drive member (120, 220, 320) to drive the derailleur (D), said member which is capable of elastically yielding (30, 40) being substantially rigid when subjected to a stress below said predetermined threshold stress., **characterised by** further comprising a mechanical fuse (17, 18, 21).

2. Device according to any one of the previous claims, wherein said member which is capable of elastically yielding (30, 40) comprises a preloaded spring (30, 40).

3. Device according to any one of the previous claims, wherein the drive member comprises a motor (121) and a threaded drive shaft (122) rotated by the motor (121), wherein the mechanism (101) comprises:
- an articulated quadrilateral with four connecting rods (102, 103, 104, 105) hinged together about four pin axes by four pin elements (106, 107, 108, 109), wherein the first connecting rod (102) is intended to be solidly fastened to a bicycle frame, and the second connecting rod (103) is opposite the first connecting rod (102) in the articulated quadrilateral and is intended to be fixed to a support (113) for the derailleur;
- a support (116) for the motor (121) associated with a first (106) of the pin elements;
- a nut (10) associated with a second (107) of the pin elements, opposite the first (106), the nut (10) being intended for engagement with the drive shaft (122) so that the action of the motor (121) moves the two opposite first and second pin elements (106, 107) closer and farther away, deforming the articulated quadrilateral, said nut (10) comprising the member which is capable of elastically yielding (30).

4. Device according to any one of claims 1 to 2, wherein the drive member (220) comprises a motor (221) and a threaded drive shaft (222) rotated by the motor (221), wherein the mechanism (201) comprises;
- an articulated quadrilateral with four connecting rods (202, 203, 204, 205) hinged together about four pin axes by four pin elements (206, 207, 208, 209), wherein the first connecting rod (202) is intended to be mixed integrally to a frame (T) of the bicycle, and the second connecting rod (203) is opposite the first connecting rod (202) in the articulated quadrilateral and is intended to be fixed to a support (223) for the derailleur (D);
- an arm (211) integral with the third connecting rod (204) of the articulated quadrilateral;
- a nut (10) associated with a fifth pin element (210) mounted on the arm (211), the nut (10) being intended for engagement with the driven shaft (222) so that the action of the motor (221) moves the arm (211), deforming the articulated quadrilateral, said nut (10) comprising the member which is capable of elastically yielding (30).

5. Device according to claim 3 or claim 4, wherein the nut (10) comprises:
- an internally hollow tubular body (11),
- two abutment surfaces in the axial direction (14, 15) forded at opposite ends of the tubular body (11):
- two opposite pin portions (12) integral and perpendicular to the tubular body (11);
- an internally threaded tubular sleeve (16), intended for engagement with the drive shaft (122, 222) and inserted so that it can slide axially in the tubular body (11),
- two protruding abutment collars (17, 18) provided on the tubular sleeve (16) threaded at opposite ends thereof,
- a spring (30) inverted on the threaded tubular sleeve (16), compressed between a first (17) of the abutment collars of the threaded tubular sleeve (16) and a first (14) of the abutment surfaces of the tubular body (11), with the second (18) of the abutment collars of the tubular sleeve (16) facing the second (15) of the abutment surfaces of the tubular body (11) due to the plastic thrust of the spring (30), the spring (30) being staid member which is capable of elastically yielding.

6. Device according to claim 5, wherein the drive shaft is inserted in the tubular sleeve (16) from the side of the first abutment collar.

7. Device according to claim 5, wherein the drive shaft (122, 222) is inserted in the tubular sleeve (16) from the side of the second abutment collar (18).

8. Device according to claim 5, **characterised in that** it comprises a second spring inserted on the threaded tubular sleeve (16), arranged between the second abutment collar (18) of the threaded tubular sleeve (16) and the second (15) of the abutment surfaces of the tubular body (11), the first and second spring (30) constituting respective members which are capable of elastically yielding.

9. Device according to any one of claims 1 to 2, wherein the drive member (320) comprises a motor (321) and a threaded drive shaft (322) rotated by the motor (321), wherein the mechanism (301) comprises :
- an articulated quadrilateral with four connecting rods (302, 303, 304, 305) hinged together about four pin axes by four pin elements (306, 307, 308, 309), wherein the first connecting rod (302) is intended to be fixed integrally to a frame (T) of the bicycle, and the second connecting rod (303) is opposite the first connecting rod (302) in the articulated quadrilateral and is intended to be fixed to a support (313) for the derailleur (D);
- a lever (311) connected to the third connecting rod (304) of the articulated quadrilateral;
- a sector gear (310) integral with the lever (311) and intended for engagement with the drive shaft (322) so that the action of the motor (321) moves the lever (311),
- a spring (40) acting between the lever (311) and the third connecting rod (304), said spring (40). being the member which is capable of elastically yielding.

10. Device according to claim 9, wherein:
- the lever (311) is hinged to the pin element (306) common to the first connecting rod (302) and the third connecting rod (304), and comprises a first abutment surface (330) in the annular direction;
- the third connecting rod (304) comprises a first abutment surface (332) in the angular direction, facing the first abutment surface (330) of the lever (311).

11. Device according to claim 10, wherein:
- the lever (311) comprises a second abutment surface (331), facing in an annularly opposite direction with respect to the first abutment surface (330);
- the third connecting rod (304) comprises a second abutment surface (333), facing in an angularly opposite direction with respect to the first abutment surface (332), facing the second abutment surface (331) of the lever (311);
- a spring (40) compressed between the second abutment surfaces (331, 333) of the lever (311) and of the third connecting rod (304), so as to angularly force the lever (311) and the third connecting rod (304) with the respective first abutment surfaces (330, 332) against each other.

12. Device according to claim 10, wherein the spring is a torsion spring, preloaded and mounted between the lever (311) and the third connecting rod (304) so as to force them angularly with the respective first abutment surfaces (330, 332) against each other.

13. Nut for an actuator device adapted to be used in a bicycle gearshift according to claim 1, **characterised in that** it comprises a member which is capable of elastically yielding (30) when subjected to a stress above a predetermined threshold stress being substantially rigid when subjected to a stress below said predetermined threshold stress and a mechanical fuse (17, 18, 21).

14. Nut according to claim 13, comprising:
- an internally hollow tubular body (11),
- two abutment surfaces in the axial direction (14, 15) formed at apposite ends of the tubular body (11):
- two opposite pin portions (12), integral and perpendicular to the tubular body (11),
- an internally threaded tubular sleeve (26), intended for engagement with a threaded drive shaft (122, 222) and inserted so that it can slide axially in the tubular body (11),
- two protruding abutment collars (17, 19) provided on the threaded tubular sleeve (16) at opposite ends thereof,
- a spring (30) inserted on the threaded tubular sleeve (16), compressed between a first (17) of the abutment collars of the threaded tubular sleeve (16) and a first (14) of the abutment surfaces of the tubular body (11), with the second (18) of the abutment collars of the tubular sleeve (16) facing the second (15) of the abutment surfaces of the tubular body (11) due to the elastic thrust of the spring (30), the spring (30) being said member which is capable of elastically yielding.

15. Nut according to claim 14, wherein the spring is a metal helical spring.

16. Nut according to claim 14, wherein the spring is a tubular elastomeric spring.

## Patentansprüche

1. Betätigungsvorrichtung für eine Fahrradgangschaltung, enthaltend einen Betätigungsmechanismus (101, 201, 301), der dazu bestimmt ist von einem Antriebselement (120, 220, 230) angetrieben zu werden und seinerseits einen Umwerfer (D) der Gangschaltung anzutreiben, wobei der Mechanismus (101, 201, 301) wenigstens ein Element (30, 40) enthält, das in der Lage ist, elastisch nachzugeben, wenn es einer Belastung über einer vorbestimmten Grenzbelastung ausgesetzt ist, und das Element (30, 40), das in der Lage ist, elastisch nachzugeben, einer Belastung unter dem vorbestimmten Grenzwert während der normalen Verwendung der Gangschaltung ausgesetzt ist, wenn der Mechanismus von dem Antriebselement (120, 220, 320) angetrieben wird, um den Umwerfer (D) anzutreiben, und das Element (30, 40), das in der Lage ist, elastisch nachzugeben im wesentlichen starr ist, wenn es einer Belastung unter der vorbestimmten Grenzbelastung ausgesetzt ist, **dadurch gekennzeichnet, dass** sie weiterhin eine mechanische Sicherung (17, 18, 21) enthält.

2. Vorrichtung nach einem der vorhergehenden Ansprüche, bei dem das Element (30, 40), das in der Lage ist, elastisch nachzugeben, eine vorgespannte Feder (30, 40) enthält.

3. Vorrichtung nach einem der vorhergehenden Ansprüche, bei dem das Antriebselement einen Motor (121) und eine Gewindeantriebswelle (122) enthält, die von dem Motor (121) gedreht wird, und der Mechanismus enthält:
- ein frei bewegliches Viereck mit vier Verbindungsstangen (102, 103, 104, 105), die über vier Stiftachsen durch vier Stiftelemente (106, 107, 108, 109) miteinander gelenkig verbunden sind, wobei die erste Verbindungsstange (102) dazu bestimmt ist, fest mit dem Fahrradrahmen verschraubt zu werden, und die zweite Verbindungsstange (103) der ersten Verbindungsstange (102) in dem frei beweglichen Viereck gegenüberliegt und dazu bestimmt ist, an einer Halterung (113) für den Umwerfer befestigt zu werden;
- eine Halterung (116) für den Motor (121), die mit einem ersten (106) der Stiftelemente verbunden ist; und
- eine Mutter (10), die mit einem zweiten (107) der Stiftelemente, gegenüberliegend dem ersten (106), verbunden ist, wobei die Mutter (10) dazu bestimmt ist, mit der Antriebswelle (122) derart in Eingriff zu stehen, dass die Tätigkeit des Motors (121) die beiden einander gegenüberliegenden ersten und zweiten Stiftelemente (106, 107) aufeinander zu und voneinander weg bewegt, wodurch das frei bewegliche Viereck verformt wird, und die Mutter (10) das Element (30) enthält, das in der Lage ist, elastisch nachzugeben.

4. Vorrichtung nach einem der Ansprüche 1 bis 2, bei der das Antriebselement (220) einen Motor (221) und eine Gewindeantriebswelle (222) enthält, die von dem Motor (221) gedreht wird, wobei der Mechanismus (201) enthält:
- ein frei bewegliches Viereck mit vier Verbindungsstangen (202, 203, 204, 205), die über vier Stiftachsen durch vier Stiftelemente (206, 207, 208, 209) gelenkig miteinander verbunden sind, wobei die erste Verbindungsstange (202) dazu bestimmt ist, integral an einem Rahmen (T) des Fahrrades befestigt zu werden, und die zweite Verbindungsstange (203) der ersten Verbindungsstange (202) in dem frei beweglichen Viereck gegenüberliegt, und dazu bestimmt ist, an einer Halterung (213) für den Umwerfer (D) fixiert zu werden;
- einen Arm (211), der integraler Bestandteil der dritten Verbindungsstange (204) des frei beweglichen Vierecks ist; und
- eine Mutter (10), die mit einem fünften Stiftelement (210) verbunden ist, das an dem Arm (211) angebracht ist, wobei die Mutter (10) dazu bestimmt ist, mit der Antriebswelle (222) derart in Eingriff zu stehen, dass die Tätigkeit des Motors (221) den Arm (211) bewegt, wodurch das frei bewegliche Viereck verformt wird, wobei die Mutter (10) das Element (30) enthält, das in der Lage ist, elastisch nachzugeben.

5. Vorrichtung nach Anspruch 3 oder 4, bei der die Mutter (10) enthält:
- einen inneren hohlen röhrenförmigen Körper (11);
- zwei Anschlagsflächen in der Achsrichtung (14, 15), die an gegenüberliegenden Enden des röhrenförmigen Körpers (11) ausgebildet sind;
- zwei gegenüberliegende Stiftabschnitte (12), die integraler Bestandteil des röhrenförmigen Körpers (11) und zu diesem senkrecht sind;
- eine röhrenförmige Innengewindebuchse (16), die dazu bestimmt ist, mit der Antriebswelle (122, 222) in Eingriff zu stehen und derart eingefügt ist, dass sie in dem röhrenförmigen Körper (11) axial gleiten kann;
- zwei hervorragende Anschlagkränze (17, 18), die an der röhrenförmigen Buchse (16) vorgesehen sind und auf gegenüberliegende Enden derselben geschraubt sind; und
- eine Feder (30), die an der röhrenförmigen Gewindebuchse (16) eingefügt ist und zwischen einem ersten (17) der Anschlagkränze der röhrenförmigen Gewindebuchse (16) und einer ersten (14) der Anschlagsflächen des röhrenförmigen Körpers (11) zusammengedrückt ist, wobei der zweite (18) der Anschlagkränze der röhrenförmigen Buchse (18) der zweiten (15) der Anschlagsflächen des röhrenförmigen Körpers (11) infolge des elastischen Schubs der Feder (30) zugewandt ist, und die Feder (30) das Element ist, das in der Lage ist, elastisch nachzugeben.

6. Vorrichtung nach Anspruch 5, bei der die Antriebswelle in die röhrenförmige Buchse (16) von der Seite des ersten Anschlagkranzes eingefügt ist.

7. Vorrichtung nach Anspruch 5, bei der die Antriebswelle (122, 222) in die röhrenförmige Buchse (16) von der Seite des zweiten Anschlagkranzes (18) eingefügt ist.

8. Vorrichtung nach Anspruch 5, **dadurch gekennzeichnet, dass** sie eine zweite Feder enthält, die an der röhrenförmigen Gewindebuchse (16) eingefügt und zwischen dem zweiten Anschlagkranz (18) der röhrenförmigen Gewindehülse (16) und der zweiten (15) der Anschlagsflächen des röhrenförmigen Körpers (11) angeordnet ist, wobei die erste und die zweite Feder (30) entsprechende Elemente Bilden, die in der Lage sind, elastisch nachzugeben.

9. Vorrichtung nach einem der Ansprüche 1 bis 2, bei der das Antriebselement (320) einen Motor (321) und eine Gewindaantriebswelle (322) enthält, die von dem Motor (321) gedreht wird, und der Mechanismus (301) enthält:
- ein frei bewegliches Viereck mit vier Verbindungsstangen (302, 303, 304, 305), die über vier Stiftachsen durch vier Stiftelemente (306, 307, 308, 309) gelenkig miteinander verbunden sind, wobei die erste Verbindungsstange (302) dazu bestimmt ist, integral an einem Rahmen (T) des Fahrrades befestigt zu werden, und die zweite Verbindungsstange (303) der ersten Verbindungsstange (302) in dem frei beweglichen Viereck gegenüberliegt und dazu bestimmt ist, an einer Halterung (313) für den Umwerfer (D) fixiert zu werden;
- einen Hebel (311), der mit der dritten Verbindungsstange (304) des frei beweglichen Vierecks verbunden ist;
- ein Zahnsegment (310), das integraler Bestandteil des Hebels (311) und dazu bestimmt ist, mit der Antriebswelle derart in Eingriff zu stehen, dass die Tätigkeit des Motors (321) den Hebel (311) bewegt; und
- eine Feder (40), die zwischen dem Hebel (311) und der dritten Verbindungsstange (304) wirkt, wobei die Feder (40) das Element ist, das in der Lage ist, elastisch nachzugeben.

10. Vorrichtung nach Anspruch 9, bei der
- der Hebel (311) an dem Stiftelement (306) gelenkig gelagert ist, das der ersten Verbindungsstange (302) und der dritten Verbindungsstange (304) gemein ist, und eine erste Anschlagsfläche (330) in der Winkelrichtung enthält; und
- die dritte Verbindungsstange (304) eine erste Anschlagsfläche (332) in der Winkelrichtung enthält, die der ersten Anschlagsfläche (330) des Hebels (311) zugewandt ist.

11. Vorrichtung nach Anspruch 10, bei der:
- der Hebel (311) eine zweite Anschlagsfläche (331) enthält, die in eine winkelig entgegengesetzten Richtung im Bezug auf die erste Anschlagsfläche (330) weist;
- die dritte Verbindungsstange (304) eine zweite Anschlagsfläche (333) enthält, die in eine winkelig entgegengesetzte Richtung im Bezug auf die erste Anschlagsfläche (332) weist und der zweiten Anschlagsfläche (331) des Hebels (311) zugewandt ist; und
- eine Feder (40), die zwischen den zweiten Anschlagsflächen (331, 333) des Hebels (311) und der dritten Verbindungsstange (304) derart zusammengedrückt ist, dass sie den Hebel (311) und die dritte Verbindungsstange (304) mit den entsprechenden ersten Anschlagsflächen (330, 332) winkelig gegeneinander drückt.

12. Vorrichtung nach Anspruch 10, bei der die Feder eine Torsionsfeder ist, die vorgespannt und zwischen dem Hebel (311) und der dritten Verbindungsstange (304) angebracht ist, um diese im Bezug auf die ersten Anschlagsflächen (330, 332) winkelig gegeneinander zu drücken.

13. Mutter für eine Betätigungsvorrichtung, die dazu eingerichtet ist in einer Fahrradgangschaltung nach Anspruch 1 verwendet zu werden, **dadurch gekennzeichnet, dass** sie ein Element (30), das in der Lage ist, elastisch nachzugeben, wenn es einer Belastung über einer vorbestimmten Grenzbelastung ausgesetzt ist, und im wesentlichen starr ist, wenn es einer Belastung unter der vorbestimmten Grenzbelastung ausgesetzt ist, und eine mechanische Sicherung (17, 18, 21) enthält.

14. Mutter nach Anspruch 13, enthaltend:
- einen inneren hohlen röhrenförmigen Körper (11);
- zwei Anschlagsflächen in der Achsrichtung (14, 15), die an gegenüberliegenden Enden des röhrenförmigen Körpers (11) ausgebildet sind;
- zwei gegenüberliegende Stiftabschnitte (12), die integraler Bestandteil des röhrenförmigen Körpers (11) und zu diesem senkrecht sind;
- eine röhrenförmige Innengewindebuchse (16), die dazu bestimmt ist, mit einer Gewindeantriebswelle (122, 222) in Eingriff zu stehen und derart eingefügt ist, dass sie in dem röhrenförmigen Körper (11) axial gleiten kann;
- zwei hervorragende Anschlagkränze (17, 18), die an der röhrenförmigen Gewindebuchse (16) vorgesehen sind und auf gegenüberliegende Enden derselben geschraubt sind; und
- eine Feder (30), die an der röhrenförmigen Gewindebuchse (16) eingefügt ist und zwischen einem ersten (17) der Anschlagkränze der röhrenförmigen Gewindebuchse (16) und einer ersten (14) der Anschlagsflächen des röhrenförmigen Körpers (11) zusammengedrückt ist, wobei der zweite (18) der Anschlagkränze der röhrenförmigen Buchse (16) der zweiten (15) der Anschlagsflächen das röhrenförmigen Körpers (11) infolge des elastischen Schubs der Feder (30) zugewandt ist, und die Feder (30) das Element ist, das in der Lage ist, elastisch nachzugeben.

15. Mutter nach Anspruch 14, bei der die Feder eine Metallschraubenfeder ist.

16. Mutter nach Anspruch 14, bei der die Feder eine röhrenförmige Elastomerfeder ist.

## Revendications

1. Dispositif d'actionnement dévolu à un sélecteur de vitesses de bicyclette, comprenant un mécanisme d'actionnement (101, 201, 301) conçu pour être entraîné par un organe d'entraînement (120, 220, 320) et pour entraîner, à son tour, un dérailleur (D) dudit sélecteur de vitesses, ledit mécanisme (101, 201, 301) comportant au moins un organe (30, 40) apte à céder élastiquement lorsqu'il est soumis à une contrainte excédant une contrainte à seuil prédéterminé, lequel organe (30, 40), apte à céder élastiquement, est soumis à une contrainte inférieure à ladite contrainte à seuil prédéterminé, en service normal du sélecteur de vitesses, lorsque ledit mécanisme est entraîné par forlane d'entraînement (120, 220, 320) afin d'entraîner le dérailleur (D), ledit organe (30, 40), apte à céder élastiquement, étant substantiellement doué de rigidité lorsqu'il est soumis à une contrainte inférieure à ladite contrainte à seuil prédéterminé, **caractérisé par le fait qu'**il est par ailleurs muni d'un fusible mécanique (17, 18, 21).

2. Dispositif selon l'une quelconque des revendications précédentes, dans lequel ledit organe (30, 40), apte à céder élastiquement, comprend un ressort précontraint (30,40).

3. Dispositif selon l'une quelconque des revendications précédentes, dans lequel l'organe d'entraînement comporte un moteur (121) et un arbre menant fileté (122) auquel ledit moteur (121) imprime des rotations, le mécanisme (101) comprenant :
- un quadrilatère articulé comptant quatre biellettes de liaison (102, 103, 104, 105) articulées ensemble autour de quatre axes de pivot, par quatre tourillons (106, 107, 108, 109), la première biellette de liaison (102) étant conçue pour être fixée rigidement à un cadre de bicyclette, et la deuxième biellette de liaison (103) étant située en vis-à-vis de ladite première biellette de liaison (102), dans le quadrilatère articulé, et étant conçue pour être bloquée à demeure sur un support (113) affecté au dérailleur ;
- un support (116), dédié au moteur (121) et associé à un premier (106) desdits tourillons ;
- un écrou (10) associé à un quatrième (107) desdits tourillons, tourné à l'opposé du premier (106), ledit écrou (10) étant conçu pour venir en prise avec l'arbre menant (122) de façon telle que l'action, exercée par le moteur (121), rapproche et éloigne l'un de l'autre les premier et deuxième tourillons (106, 107) opposés deux à deux, avec déformation du quadrilatère articulé, ledit écrou (10) incluant l'organe (30) apte à céder élastiquement.

4. Dispositif selon l'une quelconque des revendications 1 à 2, dans lequel l'organe d'entraînement (220) comporte un moteur (221) et un arbre menant fileté (222) auquel ledit moteur (221) imprime des rotations, le mécanisme (201) comprenant :
- un quadrilatère articulé comptant quatre biellettes de liaison (202, 203, 204, 205) articulées ensemble autour de quatre axes de pivot, par quatre tourillons (206, 207, 208, 209), la première biellette de liaison (202) étant conçue pour faire corps avec un cadre (T) de la bicyclette, et la deuxième biellette de liaison (203) étant située en vis-à-vis de ladite première biellette de liaison (202), dans le quadrilatère articulé, et étant conçue pour être bloquée à demeure sur un support (213) affecté au dérailleur (D) ;
- un bras (211), faisant corps avec la troisième biellette de liaison (204) du quadrilatère articulé ;
- un écrou (10) associé à un cinquième tourillon (210) monté sur le bras (211), ledit écrou (10) étant conçu pour venir en prise avec l'arbre menant (222) de façon telle que l'action exercée par le moteur (221) imprime des mouvements audit bras (211), avec déformation du quadrilatère articulé, ledit écrou (10) incluant l'organe (30) apte à céder élastiquement.

5. Dispositif selon la revendication 3 ou la revendication 4, dans lequel l'écrou (10) comprend :
- un corps tubulaire (11) à espace interne creux ;
- deux surfaces de butée (14, 15) ménagées, dans le sens axial, à des extrémités du corps tubulaire (11) qui pointent à l'opposé;
- deux mamelons (12) pointant à l'opposé et ménagés d'un seul tenant avec ledit corps tubulaire (11), perpendiculairement à ce dernier;
- une douille tubulaire (16) à filetage intérieur, conçue pour venir en prise avec l'arbre menant (122, 222) et insérée de manière à pouvoir coulisser axialement dans ledit corps tubulaire (11) ;
- deux collets de butée (17, 18) en saillie, prévus sur ladite douille tubulaire (16) filetée à des extrémités opposées ;
- un ressort (30) enfilé sur la douille tubulaire filetée (16), comprimé entre un premier (17) desdits collets de butée de ladite douille tubulaire filetée (16) et une première (14) des surfaces de butée du corps tubulaire (11), le second (18) desdits collets de butée de ladite douille tubulaire (16) étant situé en vis-à-vis de la seconde (15) desdites surfaces de butée dudit corps tubulaire (11), sous l'effet de la poussée élastique dudit ressort (30), lequel ressort (30) représente ledit organe apte à céder élastiquement.

6. Dispositif selon la revendication 5, dans lequel l'arbre menant est inséré dans la douille tubulaire (16) depuis le côté du premier collet de butée.

7. Dispositif selon la revendication 5, dans lequel l'arbre menant (122, 222) est inséré dans la douille tubulaire (16) depuis le côté du second collet de butée (18).

8. Dispositif selon la revendication 5, **caractérisé par le fait qu'**il comporte un second ressort enfilé sur la douille tubulaire filetée (16), interposé entre le second collet de butée (18) de ladite douille tubulaire filetée (16) et la seconde (15) des surfaces de butée du corps tubulaire (11), les premier et second ressorts (30) constituant des organes respectifs aptes à céder élastiquement.

9. Dispositif selon l'une quelconque des revendications 1 à 2, dans lequel l'organe d'entraînement (320) comporte un moteur (321) et un arbre menant fileté (322) auquel ledit moteur (321) imprime des rotations, le mécanisme (301) comprenant :
- un quadrilatère articulé comptant quatre biellettes de liaison (302, 303, 304, 305) articulées ensemble autour de quatre axes de pivot, par quatre tourillons (306, 307, 308, 309), la première biellette de liaison (302) étant conçue pour faire corps avec un cadre (T) de la bicyclette, et la deuxième biellette de liaison (303) étant située en vis-à-vis de ladite première biellette de liaison (302), dans le quadrilatère articulé, et étant conçue pour être bloquée à demeure sur un support (313) affecté au dérailleur (D) ;
- un levier (311), relié à la troisième biellette de liaison (304) du quadrilatère articulé ;
- un secteur denté (310), faisant corps avec le levier (311) et conçu pour venir en prise avec l'arbre menant (322) de façon telle que l'action exercée par le moteur (321) imprime des mouvements audit levier (311) ;
- un ressort (40) agissant entre ledit levier (311) et ladite troisième biellette de liaison (304), ledit ressort (40) représentant l'organe apte à céder élastiquement.

10. Dispositif selon la revendication 9, dans lequel :
- le levier (311) est articulé sur le tourillon (306) commun à la première biellette de liaison (302) et à la troisième biellette de liaison (304), et comporte une première surface de butée (330) dans la direction angulaire ;
- ladite troisième biellette de liaison (304) comporte, dans la direction angulaire, une première surface de butée (332) située en vis-à-vis de la première surface de butée (330) dudit levier (311).

11. Dispositif selon la revendication 10, dans lequel :
- le levier (311) comporte une seconde surface de butée (331), pointant dans une direction angulaire opposée par rapport à la première surface de butée (330) ;
- la troisième biellette de liaison (304) comporte une seconde surface de butée (333), pointant dans une direction angulaire opposée par rapport à la première surface de butée (332), et située en vis-à-vis de la seconde surface de butée (331) dudit levier (311) ;
- un ressort (40), comprimé entre les secondes surfaces de butée (331, 333) du levier (311) et de la troisième biellette de liaison (304), afin de plaquer à force ledit levier (311) et ladite troisième biellette de liaison (304) l'un contre l'autre, dans la direction angulaire, par les premières surfaces de butée (330, 332) respectives.

12. Dispositif selon la revendication 10, dans lequel le ressort est un ressort de torsion, précontraint et monté entre le levier (311) et la troisième biellette de liaison (304), afin de les plaquer à force l'un contre l'autre, dans la direction angulaire, par les premières surfaces de butée (330, 332) respectives.

13. Ecrou destiné à un dispositif d'actionnement conforme à la revendication 1 et conçu pour être utilisé dans un sélecteur de vitesses de bicyclette, **caractérisé par le fait qu'**il comprend un organe (30) qui est apte à céder élastiquement lorsqu'il est soumis à une contrainte excédant une contrainte à seuil prédéterminé, et qui est substantiellement doué de rigidité lorsqu'il est soumis à une contrainte inférieure à ladite contrainte à seuil prédéterminé, et un fusible mécanique (17, 18, 21).

14. Ecrou selon la revendication 13, comprenant :
- un corps tubulaire (11) à espace interne creux ;
- deux surfaces de butée (14, 15) ménagées, dans le sens axial, à des extrémités du corps tubulaire (11) qui pointent à l'opposé;
- deux mamelons (12) pointant à l'opposé et ménagés d'un seul tenant avec ledit corps tubulaire (11), perpendiculairement à ce dernier ;
- une douille tubulaire (16) à filetage intérieur, conçue pour venir en prise avec un arbre menant (122, 222) et insérée de manière à pouvoir coulisser axialement dans ledit corps tubulaire (11) ;
- deux collets de butée (17, 18) en saillie, prévus sur ladite douille tubulaire filetée (16) à des extrémités de cette dernière qui pointent à l'opposé ;
- un ressort (30) enfilé sur la douille tubulaire filetée (16), comprimé entre un premier (17) desdits collets de butée de ladite douille tubulaire filetée (16) et une première (14) des surfaces de butée du corps tubulaire (11), le second (18) desdits collets de butée de ladite douille tubulaire (16) étant situé en vis-à-vis de la seconde (15) desdites surfaces de butée dudit corps tubulaire (11), sous l'effet de la poussée élastique dudit ressort (30), lequel ressort (30) représente ledit organe apte à céder élastiquement.

15. Ecrou selon la revendication 14, dans lequel le ressort est un ressort hélicoïdal métallique.

16. Ecrou selon la revendication 14, dans lequel le ressort est un ressort tubulaire en un élastomère.
